# EUROPEAN PATENT APPLICATION

(11) **EP 3 228 478 A1**
(43) Date of publication of application: **11.10.2017**
(21) Application number: 15865017.6
(22) Date of filing: 03.12.2015
(51) Int. Cl.: B60C 11/00, B60C 11/03, B60C 11/12

(54) **PNEUMATIC TIRE**

(30) Priority: 03.12.2014 JP 2014245356
(71) Applicant: The Yokohama Rubber Company, Limited, Tokyo 105-8685 (JP)
(72) Inventor: FURUSAWA, Hiroshi, Hiratsuka-shi Kanagawa 254-8601 (JP)
(74) Representative: Dilg, Haeusler, Schindelmann Patentanwaltsgesellschaft mbH
(86) International application number: PCT/JP2015/084063
(87) International publication number: WO 2016/088856

(57) **Abstract**

A pneumatic tire (1) comprises in a tread surface thereof a land portion (33) that comprises a plurality of blocks (5). Each of the blocks (5) comprises in a contact patch thereof a plurality of narrow shallow grooves (7) and a plurality of recessed portions (8) disposed separated from the narrow shallow grooves (7). The narrow shallow grooves (7) have a groove width of from 0.2 mm to 0.7 mm and a groove depth of from 0.2 mm to 0.7 mm. The recessed portions (8) have the same depth as the narrow shallow grooves (7).

## Description

### Technical Field

The present invention relates to a pneumatic tire and particularly relates to a pneumatic tire with improved braking performance on ice.

### Background Art

Typically, a new tire has chemicals adhered to the tread surface. These chemicals reduce the water absorbing function and edge function of the blocks in the early stages of wear, thus reducing the braking performance on ice. Because of this, studless tires in recent years have been provided with a plurality of fine narrow shallow grooves in the surface of the blocks. In such a configuration, the narrow shallow grooves remove a film of water formed between the icy road surface and the tread surface in the early stages of wear, thus improving the braking performance on ice of the tire. An example of a conventional pneumatic tire that is configured in this manner is the technology described in Patent Document 1.

### Citation List

### Patent Literature

Patent Document 1: Japanese Patent No. 3702958B

### Summary of Invention

### Technical Problem

An object of the present invention is to provide a pneumatic tire with improved braking performance on ice.

### Solution to Problem

To achieve the object described above, a pneumatic tire according to an embodiment of the present invention comprises in a tread surface thereof a land portion which is a rib or a row of blocks, the land portion comprising in a contact patch thereof a plurality of narrow shallow grooves, and a plurality of recessed portions disposed separated from the narrow shallow grooves.

### Advantageous Effects of Invention

According to a pneumatic tire according to an embodiment of the present invention, the recessed portion remove a film of water formed in a region between adjacent narrow shallow grooves (in particular, the end portions and corner portions of the blocks described below), thus the water absorption performance of the narrow shallow grooves is supplemented. Thus, the braking performance on ice of the tire is ensured.

### Brief Description of Drawings

- FIG. 1: is a cross-sectional view in a tire meridian direction illustrating a pneumatic tire according to an embodiment of the present invention.
- FIG. 2: is a plan view illustrating a tread surface of the pneumatic tire illustrated in FIG. 1.
- FIG. 3: is an explanatory diagram illustrating a land portion of the pneumatic tire illustrated in FIG. 2.
- FIG. 4: is an enlarged view illustrating a main portion of a block illustrated in FIG. 3.
- FIG. 5: is a cross-sectional view of a contact patch of the block illustrated in FIG. 4 taken along line A-A.
- FIG. 6: is an explanatory diagram illustrating a land portion of the pneumatic tire illustrated in FIG. 2.
- FIG. 7: is an explanatory diagram illustrating a land portion of the pneumatic tire illustrated in FIG. 2.
- FIG. 8: is an explanatory diagram illustrating a modified example of the pneumatic tire illustrated in FIG. 4.
- FIG. 9: is an explanatory diagram illustrating a modified example of the pneumatic tire illustrated in FIG. 4.
- FIG. 10: is an explanatory diagram illustrating a modified example of the pneumatic tire illustrated in FIG. 4.
- FIG. 11: is an explanatory diagram illustrating a modified example of the pneumatic tire illustrated in FIG. 4.
- FIG. 12: is an explanatory diagram illustrating a modified example of the pneumatic tire illustrated in FIG. 4.
- FIG. 13: is an explanatory diagram illustrating a modified example of the pneumatic tire illustrated in FIG. 4.
- FIG. 14: is an explanatory diagram illustrating a modified example of the pneumatic tire illustrated in FIG. 4.
- FIG. 15: is an explanatory diagram illustrating a modified example of the pneumatic tire illustrated in FIG. 4.
- FIG. 16: is an explanatory diagram illustrating a modified example of the pneumatic tire illustrated in FIG. 4.
- FIG. 17: is an explanatory diagram illustrating a modified example of the pneumatic tire illustrated in FIG. 5.
- FIG. 18: is an explanatory diagram illustrating a modified example of the pneumatic tire illustrated in FIG. 4.
- FIG. 19: is an explanatory diagram illustrating a modified example of the pneumatic tire illustrated in FIG. 4.
- FIG. 20: is an explanatory diagram illustrating a modified example of the pneumatic tire illustrated in FIG. 4.
- FIG. 21: is an explanatory diagram illustrating a modified example of the pneumatic tire illustrated in FIG. 4.
- FIG. 22: is a table showing results of performance testing of pneumatic tires according to embodiments of the present invention.

### Description of Embodiments

Embodiments of the present invention are described in detail below with reference to the drawings. However, the present invention is not limited to these embodiments. Moreover, constituents of the embodiments include elements that are replaceable while maintaining consistency with the invention, and obviously replaceable elements. Furthermore, the modified examples described in the embodiments can be combined as desired within the scope apparent to those skilled in the art.

### Pneumatic Tire

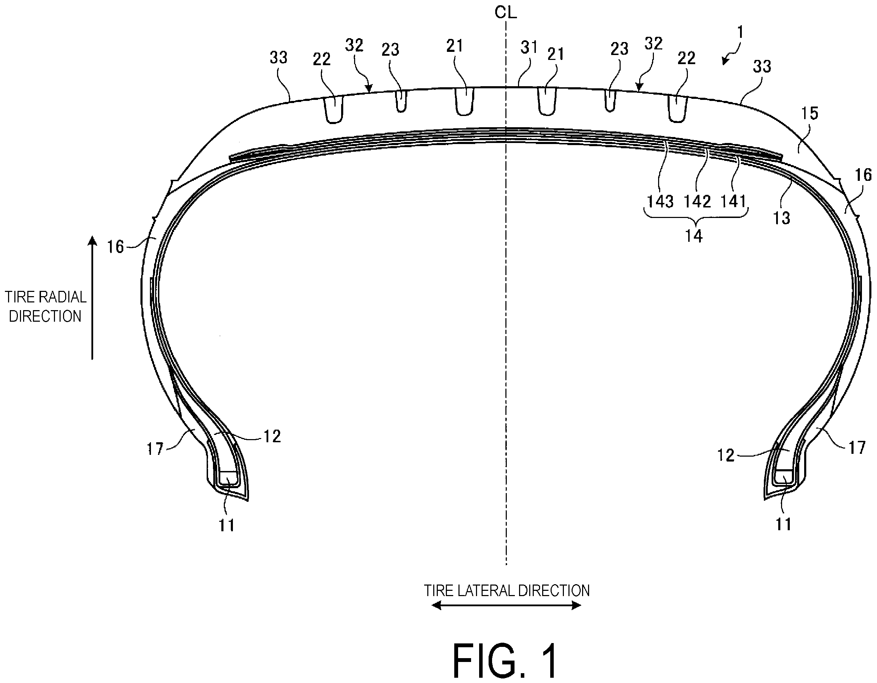

FIG. 1 is a cross-sectional view in a tire meridian direction illustrating a pneumatic tire according to an embodiment of the present invention. The same drawing is a cross-sectional view illustrating a region to one side in the tire radial direction. Also, the same drawing illustrates a radial tire for a passenger vehicle as an example of a pneumatic tire.

In reference to the same drawing, "cross section in a tire meridian direction" refers to a cross section of the tire taken along a plane that includes the tire rotation axis (not illustrated). Reference sign CL denotes the tire equatorial plane and refers to a plane normal to the tire rotation axis that passes through the center point of the tire in the tire rotation axis direction. "Tire lateral direction" refers to the direction parallel with the tire rotation axis. "Tire radial direction" refers to the direction perpendicular to the tire rotation axis.

The pneumatic tire 1 has an annular structure with the tire rotational axis as its center and includes a pair of bead cores 11, 11, a pair of bead fillers 12, 12, a carcass layer 13, a belt layer 14, a tread rubber 15, a pair of sidewall rubbers 16, 16, and a pair of rim cushion rubbers 17, 17 (see FIG. 1).

The pair of bead cores 11, 11 are annular members constituted by a plurality of bead wires bundled together. The pair of bead cores 11, 11 constitute the cores of the left and right bead portions. The pair of bead fillers 12, 12 are disposed on peripheries of the pair of bead cores 11, 11 in the tire radial direction and constitute the bead portions.

The carcass layer 13 has a single-layer structure constituted by one carcass ply or a multi-layer structure constituted by layered carcass plies, and stretches between the left and right bead cores 11, 11 in a toroidal form, forming the framework for the tire. Additionally, both end portions of the carcass layer 13 are turned back outwardly in the tire lateral direction so as to wrap around the bead cores 11 and the bead fillers 12 and fixed. The carcass ply (plies) of the carcass layer 13 is constituted by a plurality of carcass cords that are formed of steel or an organic fiber material (e.g. aramid, nylon, polyester, rayon, or the like), covered by a coating rubber, and subjected to a rolling process. The carcass ply (plies) has a carcass angle (inclination angle of the fiber direction of the carcass cords with respect to the tire circumferential direction), as an absolute value, of from 80 degrees to 95 degrees.

The belt layer 14 is formed by layering a pair of cross belts 141, 142 and a belt cover 143 and is disposed around the periphery of the carcass layer 13. The pair of cross belts 141, 142 are constituted by a plurality of belt cords formed from steel or an organic fiber material covered by coating rubber and subjected to a rolling process. The cross belts 141, 142 have a belt angle, as an absolute value, of from 20 degrees to 55 degrees. Furthermore, the pair of cross belts 141, 142 have belt angles (inclination angle of the fiber direction of the belt cords with respect to the tire circumferential direction) of opposite signs, and the belts are layered so that the fiber directions of the belt cords intersect each other (crossply structure). The belt cover 143 is constituted by a plurality of cords formed from steel or an organic fiber material covered by coating rubber and subjected to a rolling process. The belt cover 143 has a belt angle, as an absolute value, of from 0 to 10 degrees. The belt cover 143 is disposed in a layered manner outward of the cross belts 141, 142 in the tire radial direction.

The tread rubber 15 is disposed outward of the carcass layer 13 and the belt layer 14 in the tire radial direction and constitutes a tread portion. The pair of sidewall rubbers 16, 16 are disposed outward of the carcass layer 13 in the tire lateral direction and constitute left and right sidewall portions. The pair of rim cushion rubbers 17, 17 are disposed inward of the left and right bead cores 11, 11 and the turned back portions of the carcass layer 13 in the tire radial direction. The pair of rim cushion rubbers 17, 17 constitute the contact surfaces of the left and right bead portions with the rim flanges.

### Tread Pattern

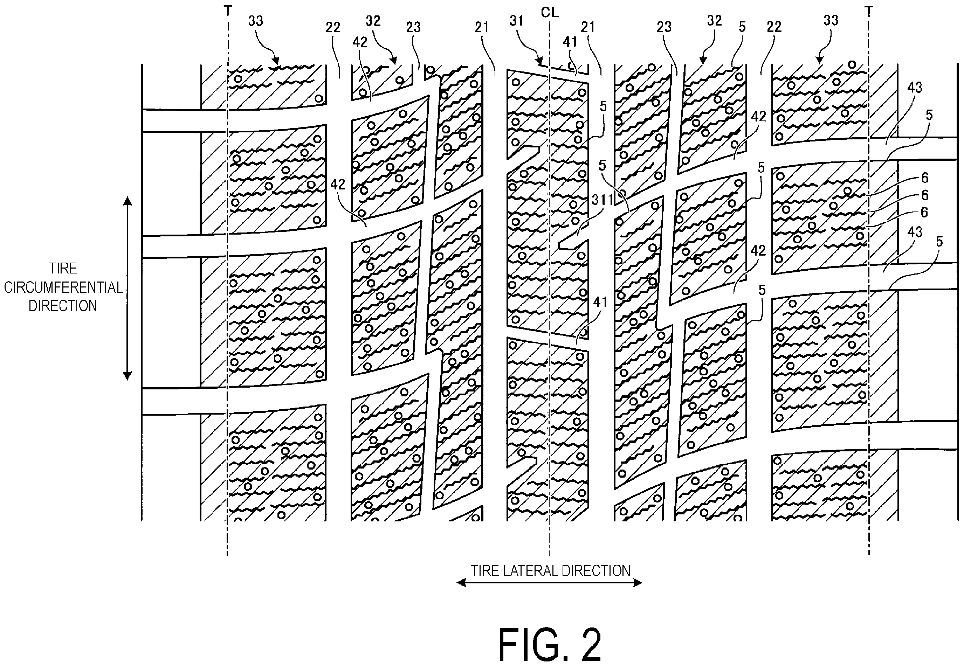

FIG. 2 is a plan view illustrating a tread surface of the pneumatic tire illustrated in FIG. 1. The same drawing illustrates a tread pattern of a studless tire. In reference to the same drawing, "tire circumferential direction" refers to the direction revolving about the tire rotational axis. Reference sign T denotes a tire ground contact edge.

As illustrated in FIG. 2, the pneumatic tire 1 is provided with, in the tread portion, a plurality of circumferential main grooves 21, 22 extending in the tire circumferential direction, a plurality of land portions 31 to 33 defined by the circumferential main grooves 21, 22, and a plurality of lug grooves 41 to 43 disposed in the land portions 31 to 33.

"Circumferential main groove" refers to a circumferential groove with a wear indicator that indicates the terminal stage of wear and typically has a groove width of 5.0 mm or greater and a groove depth of 7.5 mm or greater. Moreover, "lug groove" refers to a lateral groove having a groove width of 2.0 mm or greater and a groove depth of 3.0 mm or greater.

The groove width is the maximum distance between the left and right groove walls at the groove opening portion and is measured when the tire is mounted on a specified rim, inflated to the specified internal pressure, and in an unloaded state. In configurations in which the land portions include notched portions or chamfered portions on the edge portions thereof, the groove width is measured with reference to the points where the tread contact patch and extension lines of the groove walls meet, when viewed in a cross-section normal to the groove length direction. Additionally, in configuration in which the grooves extend in a zigzag-like or wave-like manner in the tire circumferential direction, the groove width is measured with reference to the center line of the amplitude of the groove walls.

The groove depth is the maximum distance from the tread contact patch to the groove bottom and is measured when the tire is mounted on a specified rim, inflated to the specified internal pressure, and in an unloaded state. Additionally, in configurations in which the grooves include an uneven portion or sipes on the groove bottom, the groove depth is measured excluding these portions.

"Specified rim" refers to an "applicable rim" as defined by the Japan Automobile Tyre Manufacturers Association Inc. (JATMA), a "Design Rim" as defined by the Tire and Rim Association, Inc. (TRA), or a "Measuring Rim" as defined by the European Tyre and Rim Technical Organisation (ETRTO). Additionally, "specified internal pressure" refers to a "maximum air pressure" as defined by JATMA, to the maximum value in "TIRE LOAD LIMITS AT VARIOUS COLD INFLATION PRESSURES" as defined by TRA, and to "INFLATION PRESSURES" as defined by ETRTO. Additionally, "specified load" refers to a "maximum load capacity" as defined by JATMA, the maximum value in "TIRE LOAD LIMITS AT VARIOUS COLD INFLATION PRESSURES" as defined by TRA, and a "LOAD CAPACITY" as defined by ETRTO. However, in the case of JATMA, for a passenger vehicle tire, the specified internal pressure is an air pressure of 180 kPa, and the specified load is 88% of the maximum load capacity.

For example, in the configuration of FIG. 2, four circumferential main grooves 21, 22 having a straight shape are disposed having left-right symmetry about the tire equatorial plane CL. Additionally, five land portions 31 to 33 are defined by the four circumferential main grooves 21, 22. The land portion 31 is disposed on the tire equatorial plane CL. The land portions 31 to 33 include a plurality of lug grooves 41 to 43 disposed at predetermined pitches in the tire circumferential direction that penetrate the land portions 31 to 33 in the tire lateral direction. The second land portions 32 are each provided with a circumferential narrow groove 23 that extends in the tire circumferential direction while bending. The land portions 31 to 33 are each formed as a row of blocks that are defined by the circumferential main grooves 21, 22, the circumferential narrow grooves 23, and the lug grooves 41 to 43.

Note that in the configuration of FIG. 2, as described above, the circumferential main grooves 21, 22 have a straight shape. However, the present invention is not limited to such a configuration, and the circumferential main grooves 21, 22 may have a zigzag shape or a wave-like shape that bends or curves while extending in the tire circumferential direction (not illustrated).

In the configuration of FIG. 2, as described above, the land portions 31 to 33 are divided in the tire circumferential direction by the lug grooves 41 to 43, forming rows of blocks. However, the present invention is not limited to such a configuration, and, for example, the lug grooves 41 to 43 may have a semi-closed structure in which the lug grooves 41 to 43 terminate within the land portions 31 to 33, thus forming the land portions 31 to 33 as ribs continuous in the tire circumferential direction (not illustrated).

In the configuration of FIG. 2, the pneumatic tire 1 has a tread pattern with left-right symmetry. However, the present invention is not limited to such a configuration, and, for example, the tread pattern may have left-right line symmetry, left-right asymmetry, or directionality in the tire rotation direction (not illustrated).

In the configuration of FIG. 2, the pneumatic tire 1 is provided with the circumferential main grooves 21, 22 that extend in the tire circumferential direction. However, the present invention is not limited to such a configuration, and instead of the circumferential main grooves 21, 22, the pneumatic tire 1 may be provided with a plurality of inclined main grooves that extend while inclining at a predetermined angle with respect to the tire circumferential direction. For example, the pneumatic tire 1 may be provided with a plurality of V-shaped inclined main grooves that have a V-shape projecting in the tire circumferential direction and extend in the tire lateral direction opening at the left and right tread edges, a plurality of lug grooves that connect adjacent V-shaped inclined main grooves, and a plurality of land portions that are defined by the V-shaped inclined main grooves and the lug grooves (not illustrated).

### Block Sipes

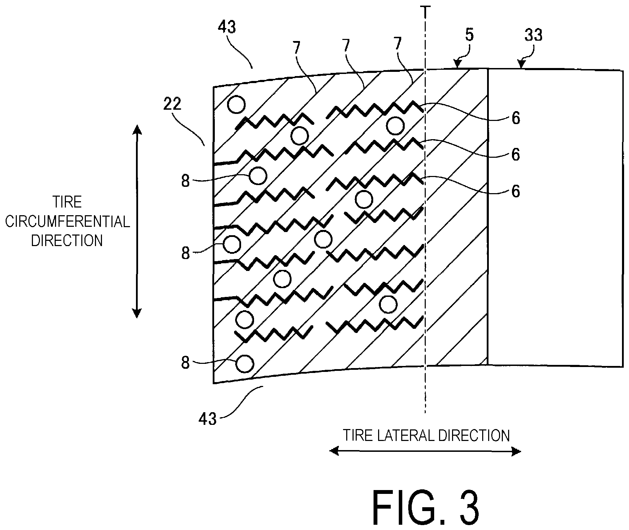

FIG. 3 is an explanatory diagram illustrating a land portion of the pneumatic tire illustrated in FIG. 2. FIG. 3 is a plan view of one of the blocks 5 that compose the shoulder land portion 33.

As illustrated in FIGS. 2 and 3, in the pneumatic tire 1, the blocks 5 of the land portions 31 to 33 include a plurality of sipes 6. By providing the sipes 6, the edge components of the land portions 31 to 33 increase and performance on snow and ice of the tire is improved.

Such a sipe is a cut formed in a land portion that typically has a sipe width of less than 1.0 mm and a sipe depth of 2.0 mm or greater and closes when the tire comes into contact with the ground. Note that the maximum value of the sipe depth is not particularly limited, but is typically less than the groove depth of the main grooves.

The sipe width is the maximum distance of the opening width of the sipe at the contact patch of the land portion and is measured when the tire is mounted on a specified rim, inflated to the specified internal pressure, and in an unloaded state.

Note that the sipes 6 may have a closed structure in which the sipes 6 terminate within the block 5 at both end portions, a semi-closed structure in which the sipes 6 open at the edge portion of the block 5 at one end portion and terminate within the block 5 at the other end portion, or an open structure in which the sipes 6 open at the edge portions of the block 5 at both end portions. Additionally, the length, number, and layout of the sipes 6 in the land portions 31 to 33 can be appropriately selected within the scope apparent to those skilled in the art. The sipes 6 can extend in the tire lateral direction, the tire circumferential direction, or any direction inclined with respect to these directions.

For example, in the configuration of FIG. 3, the shoulder land portion 33 includes the plurality of blocks 5 defined by the outermost circumferential main groove 22 and the plurality of lug grooves 43 (see FIG. 2). The blocks 5 each include a plurality of sipes 6. Additionally, the sipes 6 have a zigzag shape extending in the tire lateral direction, and are disposed side by side at predetermined pitches in the tire circumferential direction. Additionally, the outermost sipes 6 in the tire circumferential direction have a closed structure in which the sipes 6 terminate within the block 5 at both end portions. As a result, the rigidity of the edge portions of the leading edge and the trailing edge of the block 5 when the tire is rolling is ensured. The sipes 6 in the central portion in the tire circumferential direction have a semi-closed structure in which the sipes 6 open to the circumferential main groove 22 at one end portion and terminate within the block 5 at the other end portion. As a result, the rigidity of the block 5 in the central portion decreases, and the stiffness distribution of the block in the tire circumferential direction is made uniform.

### Block Narrow Shallow Groove

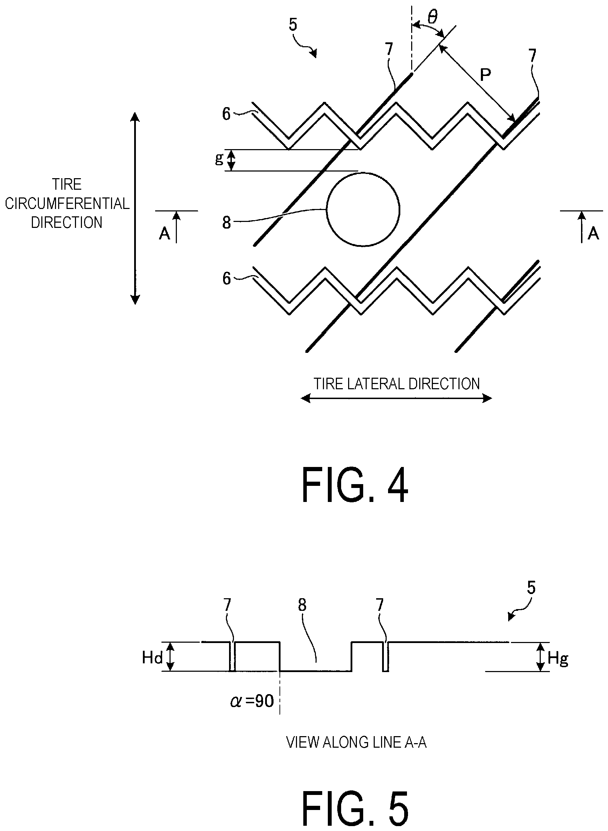

FIG. 4 is an enlarged view illustrating a main portion of the block illustrated in FIG. 3. FIG. 5 is a cross-sectional view of the contact patch of the block illustrated in FIG. 4 taken along line A-A. FIG. 4 illustrates the positional relationship between the sipes 6, narrow shallow grooves 7, and a recessed portion 8. FIG. 5 is a cross-sectional view in the depth direction of the narrow shallow grooves 7 and the recessed portion 8.

In the pneumatic tire 1, the land portions 31 to 33 include a plurality of narrow shallow grooves 7 in the contact patch (see FIG. 3). In such a configuration, by the narrow shallow grooves 7 taking in and removing a film of water formed between an icy road surface and the tread surface when the tire comes into contact with the ground, the braking performance on ice of the tire is improved.

The narrow shallow grooves 7 have a groove width of from 0.2 mm to 0.7 mm and a groove depth Hg of from 0.2 mm to 0.7 mm (see FIG. 5). Thus, the narrow shallow grooves 7 are shallower than the sipes 6. Additionally, the narrow shallow grooves 7 are disposed across the entire surface of the land portions 31 to 33.

For example, in the configuration of FIG. 3, the narrow shallow grooves 7 are disposed in the entire region of the contact patch of the shoulder land portion 33. The narrow shallow grooves 7 have a linear shape and are disposed at an incline of a predetermined inclination angle θ with respect to the tire circumferential direction (see FIG. 4). The narrow shallow grooves 7 are disposed side by side at predetermined pitches P (see FIG. 4). As illustrated in FIG. 4, the narrow shallow grooves 7 intersect the sipes 6 and are divided by the sipes 6 in the longitudinal direction.

Note that as illustrated in FIG. 3, in a configuration in which the narrow shallow grooves 7 are elongated and disposed side by side, the inclination angle θ of the narrow shallow grooves 7 (see FIG. 4) is preferably in the range 20 degrees ≤ θ ≤ 80 degrees, and more preferably in the range 40 degrees ≤ θ ≤ 60 degrees. The disposal pitch P (see FIG. 4) of the narrow shallow grooves 7 is preferably in the range 2.5 mm ≤ P ≤ 6.0 mm, and more preferably in the range 3.0 mm ≤ P ≤ 5.0 mm. As a result, the film of water removing function of the narrow shallow grooves 7 is appropriately ensured, and the ground contact area of the land portions 31 to 33 is ensured. Note that the disposal density of the narrow shallow grooves 7 is not particularly limited but is constrained by the disposal pitch P described above.

The disposal pitch P of the narrow shallow grooves 7 is defined as the distance between the groove center lines of adjacent narrow shallow grooves 7, 7.

### Block Recessed Portions

As illustrated in FIGS. 2 and 3, in the pneumatic tire 1, each of the land portions 31 to 33 includes a plurality of recessed portions 8 in the contact patch. In such a configuration, by the recessed portions 8 taking in a film of water formed between the icy road surface and the tread surface when the tire contacts the ground and the edge components of the land portions 31 to 33 being increased by providing the recessed portions 8, the braking performance on ice of the tire is improved.

Each of the recessed portions 8 is a closed recess (recess, or dimple, that does not open to the boundary of the contact patch) formed in the contact patch of the land portions 31 to 33. The recessed portion 8 has a discretionary geometrical shape at the contact patch of the land portions 31 to 33. For example, the shape of the recessed portion 8 may be circular, elliptical, quadrangular, or another polygonal shape. A circular or elliptical recessed portion 8 is preferable to reduce the uneven wear of the contact patch of the land portions 31 to 33, and a polygonal recessed portion 8 is preferable to improve the braking performance on ice by the increased edge components.

Additionally, the opening area of the recessed portion 8 preferably ranges from 2.5 mm² to 10 mm². For example, a circular recessed portion 8 has a diameter ranging from approximately 1.8 mm to 3.6 mm. As a result, the film of water removal performance of the recessed portion 8 is ensured.

The opening area of the recessed portion 8 is the opening area of the recessed portion 8 at the contact patch of the land portions 31 to 33 and is measured when the tire is mounted on a specified rim, inflated to the specified internal pressure, and in an unloaded state.

Additionally, the depth Hd (see FIG. 5) of the recessed portion 8 and the groove depth Hg of the narrow shallow groove 7 preferably have the relationship 0.5 ≤ Hd/Hg ≤ 1.5, and more preferably have the relationship 0.8 ≤ Hd/Hg ≤ 1.2. In other words, the depth Hd of the recessed portion 8 is approximately equal to the groove depth Hg of the narrow shallow groove 7. As a result, the water absorbing function of the contact patch of the land portions 31 to 33 is improved. Additionally, by the recessed portion 8 being shallow compared to the sipes (for example a linear sipe 6 or a circular sipe (not illustrated)) the rigidity of the land portions 31 to 33 is appropriate ensured. Thus, the braking performance on ice of the tire is ensured.

Additionally, a wall angle α (see FIG. 5) of the recessed portion 8 is preferably in the range -85 degrees ≤ α ≤ 95 degrees. In other words, the inner wall of the recessed portion 8 is preferably substantially vertical relative to the contact patch of the land portions 31 to 33. As a result, the edge components of the recessed portion 8 are increased.

The wall angle α of the recessed portion 8 is the angle formed by the contact patch of the land portions 31 to 33 and the inner wall of the recessed portion 8 when viewed in a depth direction cross-section of the recessed portion 8.

Additionally, as illustrated in FIG. 4, the recessed portion 8 is disposed spaced apart from the sipes 6. In other words, the recessed portions 8 and the sipes 6 are disposed at different positions in the contact patch of the land portions 31 to 33 and do not meet. The distance g between the recessed portion 8 and the sipes 6 is preferably in the range 0.2 mm ≤ g, and more preferably in the range 0.3 mm ≤ g. As a result, the rigidity of the land portions 31 to 33 is appropriately ensured.

Additionally, as illustrated in FIG. 4, the recessed portion 8 is disposed spaced apart from the narrow shallow grooves 7. In other words, the recessed portions 8 and the narrow shallow grooves 7 are disposed in the land portions 31 to 33 separated from each other and do not meet. As a result, due to that the recessed portions 8 and the narrow shallow grooves 7 do not meet each other, the continuity of the contact patches of the land portions 31 to 33 is ensured more than in a configuration in which the two meet each other. Additionally, the recessed portions 8 remove a film of water formed in a region between adjacent narrow shallow grooves 7, 7 (in particular, the end portions and corner portions of the blocks 5 described below), thus the water absorption performance of the narrow shallow grooves is supplemented. As a result, the braking performance on ice of the tire is improved.

Additionally, the distance between the recessed portion 8 and the narrow shallow grooves 7 is preferably 0.1 mm or greater, and more preferably 0.2 mm or greater. As a result, the recessed portion 8 and the narrow shallow grooves 7 are appropriately separated, and thus the rigidity of the land portions 31 to 33 is appropriately ensured. Note that the maximum value of the distance between the recessed portion 8 and the narrow shallow grooves 7 is not particularly limited but is constrained by the disposal pitch of the narrow grooves 7 and the outer diameter of the recessed portion 8.

For example, in the configuration of FIG. 3, the narrow shallow grooves 7 having a linear shape are disposed in the entire surface of the land portion 33 at a predetermined pitch while inclining at a predetermined angle with respect to the tire circumferential direction. As a result, as illustrated in FIG. 4, the adjacent narrow shallow grooves 7, 7 run side by side in the same direction. Additionally, the recessed portions 8 are disposed between two adjacent narrow shallow grooves 7, 7 and do not meet any narrow shallow groove 7. The distance between one recessed portion 8 and the left and right narrow shallow grooves 7, 7 is constant.

Additionally, as illustrated in FIG. 3, the recessed portions 8 are more thinly dispersed than the narrow shallow grooves 7. Specifically, the disposal densities Da of the recessed portions 8 in the entire region of the continuous contact patches of the land portions 31 to 33 are preferably in the range 0.8 unit/cm² ≤ Da ≤ 4.0 unit/cm² and more preferably in the range 1.0 unit/cm² ≤ Da ≤ 3.0 unit/cm². As a result, the area of the contact patches of the land portions 31 to 33 is ensured.

The disposal densities Da of the recessed portions 8 is defined as the total number of recessed portions 8 with respect to the area of the continuous contact patches of the land portions 31 to 33. For example, in a configuration in which the land portions are ribs continuous in the tire circumferential direction (not illustrated), the total number of recessed portions 8 with respect to the contact patch area of one entire rib is defined as the disposal density Da. Alternatively, in a configuration in which the land portions are blocks (see FIGS. 2 and 3), the total number of recessed portions 8 with respect to the contact patch area of one block 5 is defined as the disposal density Da.

The contact patch area of the land portions is measured at a contact surface between a tire and a flat plate when the tire is mounted on a specified rim, inflated to the specified internal pressure, placed vertically on the flat plate in a static state, and loaded with a load corresponding to the specified load.

In the configuration of FIG. 3, the blocks 5 of the shoulder land portion 33 include a rectangular contact patch. The sipes 6 are disposed side by side in the tire circumferential direction and divide the blocks 5 into a plurality of sections in the tire circumferential direction. Each section includes at least one recessed portion 8. Additionally, in the central portion of the block in the tire circumferential direction, a section including the recessed portion 8 and a section without a recessed portion 8 are disposed in an alternating arrangement in the tire circumferential direction in the end portion of the block 5 proximal to the circumferential main groove 22. In the sections in both end portions of the block 5 in the tire circumferential direction, the recessed portions 8 are disposed in the corner portions of the block 5 proximal to the circumferential main groove 22. Additionally, in the sections of both end portions of the block 5 in the tire circumferential direction, the recessed portion 8 is not disposed in the central region in the tire lateral direction (the recessed portion 8 is disposed in the corner portion).

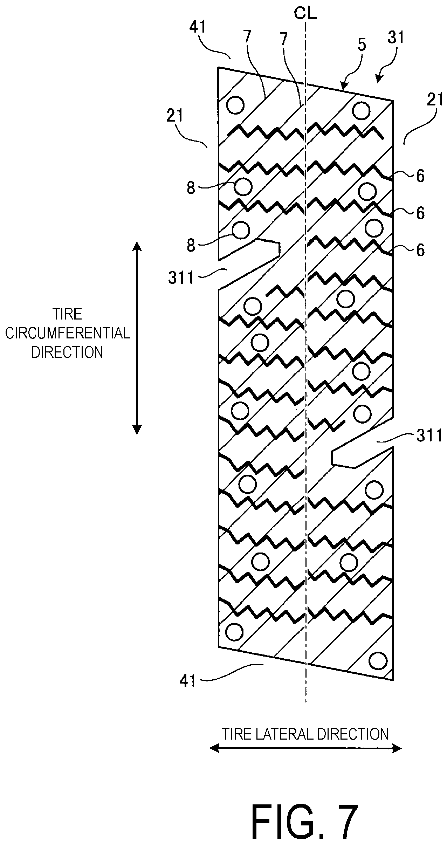

The central region of the land portions 31 to 33 is defined as the region in the central region occupying 50% of the continuous contact patch of the land portions 31 to 33 in the tire lateral direction. The end portion region of the land portions 31 to 33 is defined as the region of the left and right end portions each occupying 25% of the continuous contact patch of the land portions 31 to 33 in the tire lateral direction. The central portion region and the end portion regions are defined excluding notched portions 311 (see FIG. 7 described below) partially formed in the land portions 31 to 33. For example, in a configuration in which the land portions are ribs continuous in the tire circumferential direction (not illustrated), the contact patch of one entire rib is divided into the central region and the end portion regions. Alternatively, in a configuration in which the land portions are blocks (see FIGS. 2 and 3), the contact patch of one block 5 is divided into a central region and end portion regions. Additionally, the recessed portion 8 is considered to be disposed in the central region or the end portion regions described above if the center of the recessed portion 8 is in the central region or the end portion regions described above.

Each corner portion of the land portions 31 to 33 is defined as the region 5 mm square including the corner portion of the contact patch of the land portion. A corner portion of the land portion is not just the portion of the land portion defined by the main groove and the lug groove, but also includes the portion of the land portion defined by a notched portion formed in the land portion. Additionally, the recessed portion 8 is considered to be disposed in the corner portion described above if the center of the recessed portion 8 is in the corner portion.

The contact patch of the land portion is defined at a contact surface between a tire and a flat plate when the tire is mounted on a specified rim, inflated to the specified internal pressure, placed vertically on the flat plate in a static state, and loaded with a load corresponding to the specified load.

In the configuration of FIG. 3, three discretionary sections adjacent in the tire circumferential direction include a section including a recessed portion 8 in the end portion regions in the tire lateral direction and a section including a recessed portion 8 in the central region in the tire lateral direction. As a result, the recessed portions 8 are disposed dispersedly throughout the end portion regions and the central regions of the land portions 31 to 33.

"Sections in both end portions of the block 5 in the tire circumferential direction" refer to a pair of sections located at both end portions in the tire circumferential direction of the sections of the block 5 defined by the sipes 6 in the tire circumferential direction. "Section in the central portion of the block 5 in the tire circumferential direction" refers to the section excluding the sections in both end portions in the tire circumferential direction.

When the tire comes into contact with the ground, ground contact pressure acts upon the end portion regions of the block 5 in the tire lateral direction, in particular the end portion region proximal to the circumferential main groove 22, more than the central portion of the block 5. As a result, during travel on icy road surfaces, the ice on the road surface is readily melted by the ground contact pressure and forms a film of water. Accordingly, by disposing the recessed portions 8 in the end portions and corner portions of the blocks 5, the film of water on the icy road surface is efficiently absorbed, and the braking performance on ice of the tire is improved.

Additionally, in the configuration of FIG. 3, the sipes 6 are disposed parallel with or at a slight incline to the lug grooves 43. The sipes 6 are also disposed only in the region inward from the tire ground contact edge T in the tire lateral direction. The narrow shallow grooves 7 extend beyond the tire ground contact edge T to the outer region of the land portion 33 in the tire lateral direction. The recessed portions 8 are disposed only in the region inward from the tire ground contact edge T in the tire lateral direction.

"Tire ground contact edge T" refers to the maximum width position in the tire axial direction of the contact surface between the tire and a flat plate when the tire is mounted on a specified rim, inflated to the specified internal pressure, placed vertically on the flat plate in a static state, and loaded with a load corresponding to the specified load.

Note that in the configuration described above, at least one recessed portion 8 is preferably disposed in a position that corresponds to a vent hole of the tire mold (not illustrated). In other words, in the vulcanization molding of the tire, because the green tire is pressed against the tire mold, the air in the tire mold needs to be discharged outside. Accordingly, the tire mold includes a plurality of vent devices (not illustrated) in the mold surface for forming the contact patch of the land portions 31 to 33. Additionally, one type of vent device forms a vent hole (small recess) in the mold surface corresponding to the post-vulcanization land portions 31 to 33. Thus, by using the vent hole as a recessed portion 8, the vent hole is effectively utilized, and the number of unnecessary recesses are reduced in the contact patch of the land portions 31 to 33 allowing the contact patch area of the land portions 31 to 33 to be appropriately ensured.

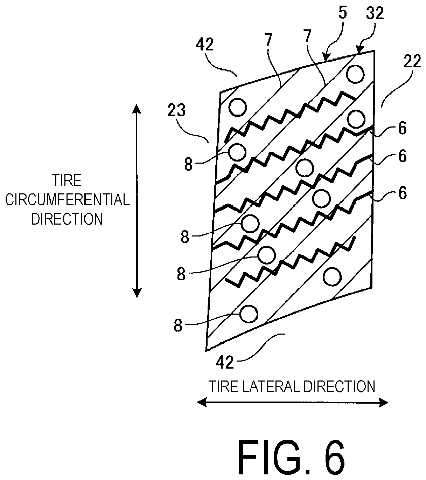

FIGS. 6 and 7 are explanatory diagrams illustrating the land portions of the pneumatic tire illustrated in FIG. 2. FIG. 6 is a plan view of one of the blocks 5 that compose the second land portion 32. FIG. 7 is a plan view of one block 5 that composes the center land portion 31.

In the configuration of FIG. 2, the second land portions 32 are each divided in the tire lateral direction by one circumferential narrow groove 23 and further divided in the tire circumferential direction by a plurality of lug grooves 42, which forms a plurality of blocks 5. Additionally, in the inner region of each of the second land portions 32 in the tire lateral direction, blocks 5 longer in the tire circumferential direction is formed, and in the outer region in the tire lateral direction, shorter blocks 5 are formed.

Additionally, as illustrated in FIG. 6, the block 5 of the second land portion 32 located outward in the tire lateral direction includes a rectangular contact patch. The sipes 6 are disposed side by side in the tire circumferential direction to divide the block 5 into a plurality of sections. Each section includes at least one recessed portion 8. Additionally, in the central portion of the block 5 in the tire circumferential direction, the section including the recessed portion 8 in only the end portion regions of the block 5 in the tire lateral direction and the section including the recessed portion 8 in only the central region in the tire lateral direction are disposed in an alternating arrangement in the tire circumferential direction. Additionally, the recessed portions 8 are disposed in the four corner portions of the block 5. In the sections in both end portions of the block 5 in the tire circumferential direction, the recessed portions 8 are not disposed in the central region in the tire lateral direction.

Typically, in the land portion 32 including the shorter blocks 5, the rigidity of the blocks 5 is reduced, thus when the vehicle brakes, the amount the blocks 5 collapse is great. In particular, in a configuration in which the blocks 5 include a plurality of sipes 6, this tendency is significant and the braking performance on ice of the tire is susceptible to being decreased. However, in such a configuration, by the blocks 5 being provided with the recessed portions 8 in all of the sections of the block 5 defined by the sipes 6, a film of water on the icy road surface is efficiently absorbed, and the braking performance on ice of the tire is ensured.

In the configuration of FIG. 2, the center land portion 31 is divided in the tire circumferential direction by a plurality of lug grooves 41 into a plurality of blocks 5. Additionally, the blocks 5 include notched portions 311 on extension lines of the lug grooves 42 of the second land portion 32. The blocks 5 include a rectangular contact patch.

Additionally, as illustrated in FIG. 7, the sipes 6 are disposed side by side in the tire circumferential direction to divide the block 5 into a plurality of sections. The block 5 includes sections without a recessed portion 8. Three discretionary adjacent sections include a section without a recessed portion 8. For example, in the configuration of FIG. 7, the section including the recessed portion 8 in only both end portions of the block 5 in the tire lateral direction and the section without a recessed portion 8 are disposed in an alternating arrangement in the tire circumferential direction. Additionally, the recessed portions 8 are disposed in the four corner portions of the block 5. In the sections in both end portions of the block 5 in the tire circumferential direction, the recessed portions 8 are not disposed in the central region in the tire lateral direction. Additionally, the section adjacent to the notched portion 311 includes the recessed portion 8.

Typically, "center land portion" refers to the land portion 31 on the tire equatorial plane CL (see FIG. 2) or adjacent land portions on either side of the tire equatorial plane CL (not illustrated). Such a center land portion 31 preferably has high rigidity to ensure the steering stability performance of the tire. Thus, as illustrated in FIG. 7, by the blocks 5 of the center land portion 31 being partially provided with sections without a recessed portion 8, the rigidity of the blocks 5 is ensured, and the steering stability performance of the tire is ensured.

### Modified Examples

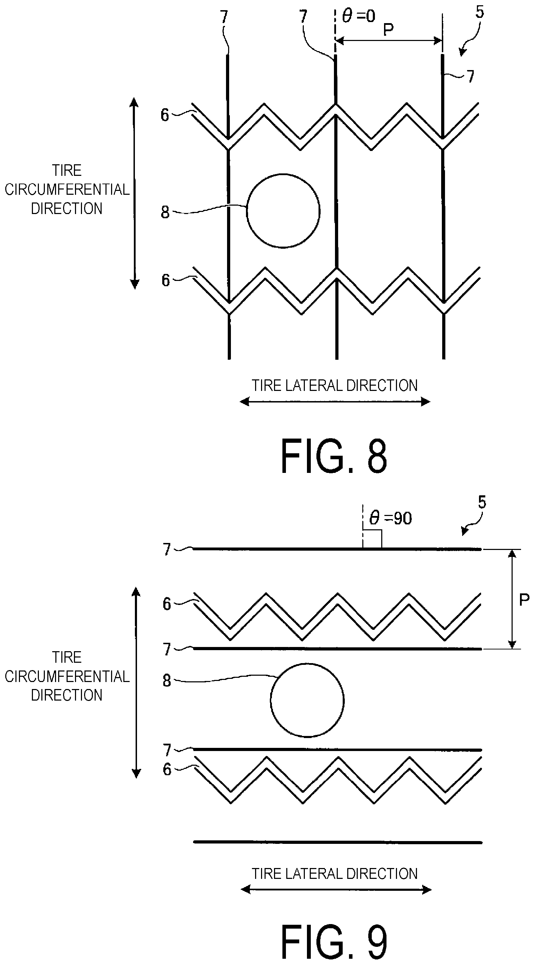

FIGS. 8 to 14 are explanatory diagrams illustrating modified examples of the pneumatic tire illustrated in FIG. 4. These drawings illustrate the positional relationship between the sipes 6, the narrow shallow grooves 7, and the recessed portion 8.

In the configuration of FIG. 4, the narrow shallow grooves 7 are disposed at an incline of a predetermined angle θ with respect to the tire circumferential direction. Such a configuration is preferable because the inclined narrow shallow grooves 7 provide edge components in both the tire circumferential direction and the tire lateral direction.

However, the present invention is not limited to such a configuration, and the narrow shallow grooves 7 may extend parallel with the tire circumferential direction (see FIG. 8), or may extend parallel with the tire lateral direction (see FIG. 9).

Additionally, in the configuration of FIG. 4, the narrow shallow grooves 7 have a linear shape. Such a configuration is preferable because the narrow shallow grooves 7 are easily formed.

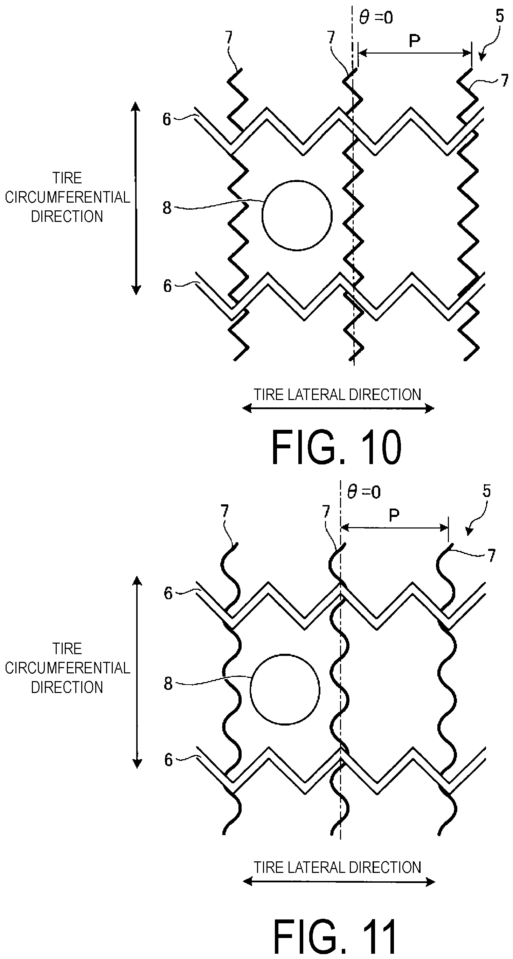

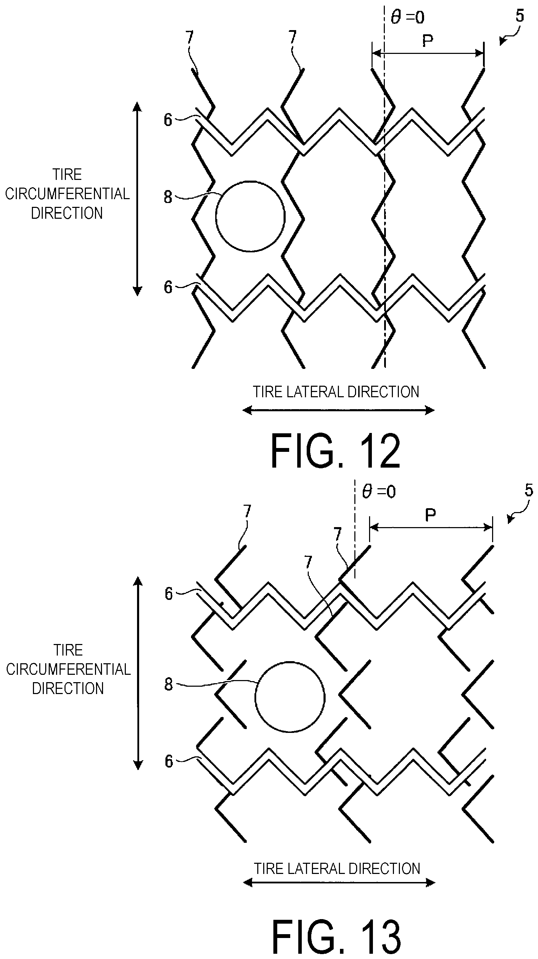

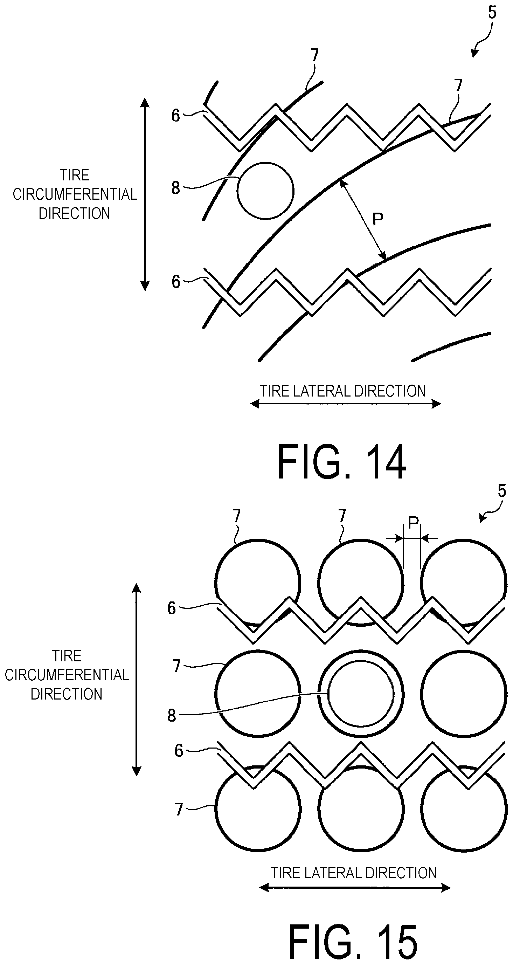

However, the present invention is not limited to such a configuration, and the narrow shallow grooves 7 may have a zigzag shape (see FIG. 10), or a wave-like shape (see FIG. 11). In such configurations, as illustrated in FIGS. 10 and 11, the plurality of narrow shallow grooves 7 may be disposed in phase with each other, or as illustrated in FIG. 12, may be disposed out of phase with each other. Additionally, as illustrated in FIG. 13, the narrow shallow grooves 7 may have a bent or curved short structure. In such configurations, the short narrow shallow grooves 7 may be arranged in rows offset from each other (see FIG. 13), or may be disposed arranged in a matrix (not illustrated). Additionally, the narrow shallow grooves 7 may have an arc shape (see FIG. 14), or may have a curved shape like an S-shape (not illustrated).

In the configurations of FIGS. 10 to 14, in a manner similar to that of the configurations of FIGS. 4, 8, and 9, the narrow shallow grooves 7 may incline at a predetermined angle θ with respect to the tire circumferential direction, may extend parallel with the tire circumferential direction, or may extend parallel with the tire lateral direction. Note that in configurations in which the narrow shallow grooves 7 have a zigzag shape or a wave-like shape, the inclination angle θ of the narrow shallow grooves 7 is measured with reference to the center of the amplitude of the zigzag shape or the wave-like shape.

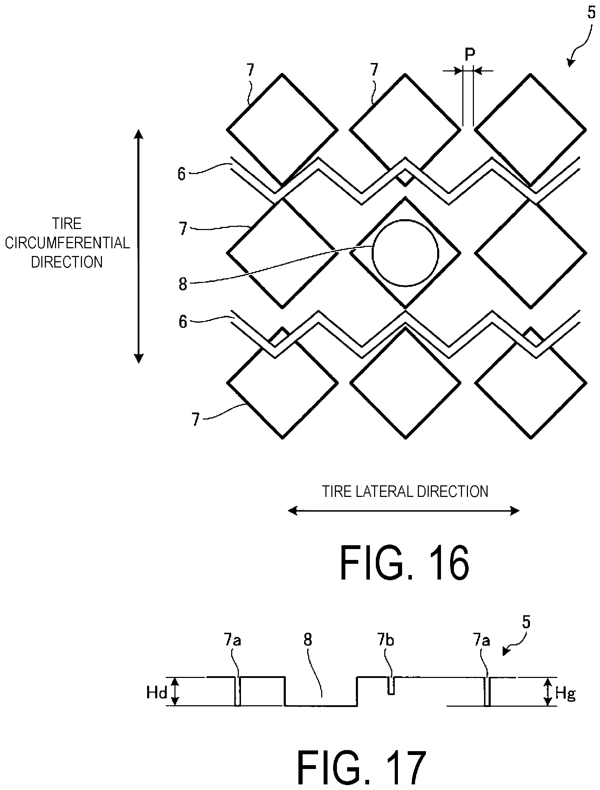

FIGS. 15 and 16 are explanatory diagrams of modified examples of the pneumatic tire illustrated in FIG. 4. These drawings illustrate the positional relationship between the sipes 6, the narrow shallow grooves 7, and the recessed portion 8.

In the configuration of FIG. 4, the narrow shallow grooves 7 have a linear structure that extends in a predetermined direction. Such a configuration is preferable because the narrow shallow grooves 7 can extend continuously throughout the entire region of the contact patch of the blocks 5.

However, the present invention is not limited to such a configuration, and as illustrated in FIGS. 15 and 16, the narrow shallow grooves 7 may have an annular structure and be disposed at predetermined pitches from each other. For example, the shape of the narrow shallow grooves 7 may be circular (FIG. 15), elliptical (not illustrated), or rectangular (FIG. 16), triangular, hexagonal, or another polygonal shape (not illustrated). Additionally, in such configurations, the recessed portions 8 are disposed in a manner such that the recessed portions 8 do not meet a narrow shallow groove 7.

FIG. 17 is an explanatory diagram illustrating a modified example of the pneumatic tire illustrated in FIG. 5. The same drawing illustrates a cross-sectional view of narrow shallow grooves 7a, 7b and the recessed portion 8 in the depth direction.

In the configuration of FIG. 5, all of the narrow shallow grooves 7 have the same groove depth Hg.

Alternatively, in the configuration of FIG. 17, the groove depth of at least one of the narrow shallow grooves 7b is lower than the standard groove depth Hg of the narrow shallow groove 7a. In such a configuration, when tire wear advances, the narrow shallow grooves 7b with a lower groove depth disappear first. The narrow shallow grooves 7a with the greater groove depth Hg disappear thereafter. This configuration can suppress a change in the properties of the blocks 5 that is caused by simultaneous disappearance of all of the narrow shallow grooves 7.

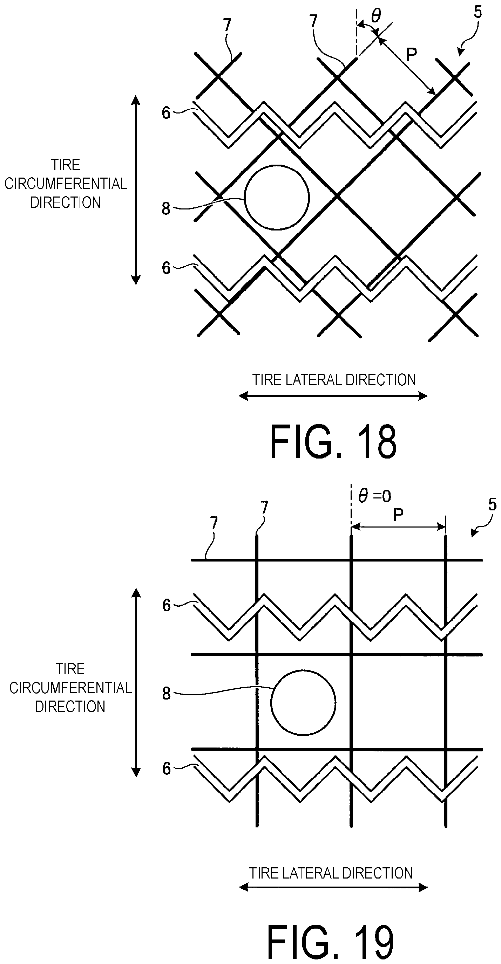

FIGS. 18 to 21 are explanatory diagrams illustrated modified examples of the pneumatic tire illustrated in FIG. 4. These drawings illustrate the positional relationship between the sipes 6, the narrow shallow grooves 7, and the recessed portion 8.

In the configuration of FIG. 4, all of the narrow shallow grooves 7 are disposed in parallel with each other. As a result, the narrow shallow grooves 7 are disposed in a stripe-like manner in which the narrow shallow grooves 7 do not intersect with each other.

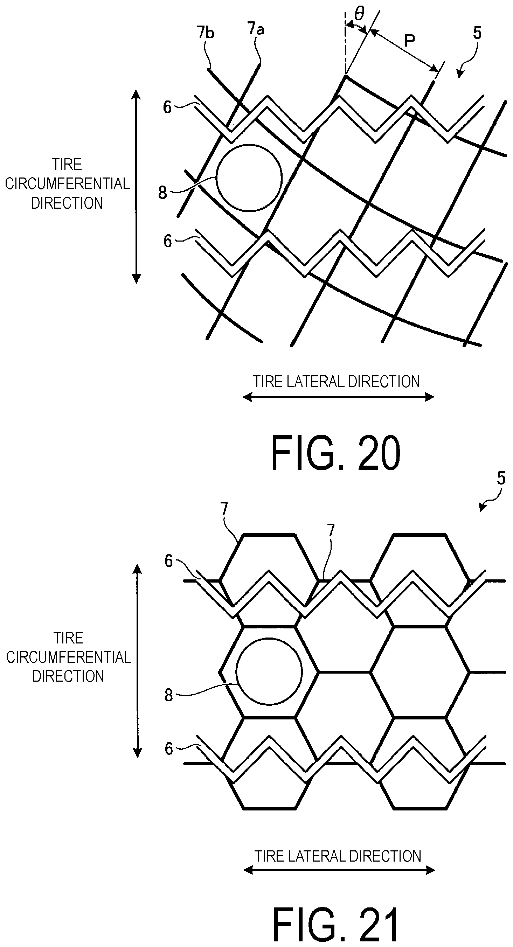

However, the present invention is not limited to such a configuration, and as illustrated in FIGS. 18 to 21, the narrow shallow grooves 7 may be disposed intersecting each other or communicating with each other. For example, as illustrated in FIGS. 18 and 20, the plurality of narrow shallow grooves 7 are disposed in a mesh-like manner. In such a configuration, the narrow shallow grooves 7 may be disposed at an incline with respect to the tire circumferential direction and the tire lateral direction (see FIG. 18) or disposed in parallel with the tire circumferential direction and the tire lateral direction (see FIG. 19). Additionally, at least one of the narrow shallow grooves 7, for example, may be disposed in an arc-like or wave-like curving manner (see FIG. 20). Additionally, the narrow shallow grooves 7 may have an annular structure and be disposed communicating with each other (FIG. 21). For example, in the configuration of FIG. 21, the narrow shallow grooves 7 are disposed in a honeycomb-like manner. Additionally, in these configurations, the recessed portions 8 are disposed in a manner such that the recessed portions 8 do not meet a narrow shallow groove 7.

### Effects

As described above, the pneumatic tire 1 is provided with, in the tread surface, the land portions 31 to 33 that include a rib or a row of blocks (see FIG. 2). The land portions 31 to 33 are provided in the contact patch thereof with the plurality of narrow shallow grooves 7 and the plurality of recessed portions 8 disposed spaced apart from the narrow shallow grooves 7 (see FIGS. 3 and 4).

Such a configuration is advantageous because: (1) by the land portions 31 to 33 being provided with recessed portions 8 in the contact patch, the edge components of the land portions 31 to 33 are increased and the braking performance on ice of the tire is improved; and (2) by the recessed portions 8 and the narrow shallow grooves 7 not meeting each other, the continuity of the contact patches of the land portions 31 to 33 is ensured more than in a configuration in which the two meet each other. Such a configuration is advantageous because the contact with the ground of the land portions 31 to 33 is improved, and the braking performance on ice of the tire is improved. Additionally, (3) the recessed portions 8 remove a film of water formed in a region between adjacent narrow shallow grooves 7, 7 (in particular, the end portions and corner portions of the blocks 5 described below), thus the water absorption performance of the narrow shallow grooves is supplemented. Such a configuration is advantageous because the water absorbency of the land portions 31 to 33 is improved, and the braking performance on ice of the tire is improved. Additionally, (4) by the recessed portion 8 being shallow compared to the sipes (for example a linear sipe 6 or a circular sipe (not illustrated)) the rigidity of the land portions 31 to 33 is appropriate ensured. Thus, the braking performance on ice of the tire is ensured.

Additionally, in the pneumatic tire 1, the disposal density Da of the recessed portions 8 in the entire region of continuous contact patches of the land portions 31 to 33 (in FIG. 3, the contact patch of block 5) is in the range 0.8 unit/cm² ≤ Da ≤ 4.0 unit/cm². Such a configuration is advantageous because the disposal density of the recessed portions 8 is made appropriate. In other words, by satisfying 0.8 unit/cm² ≤ Da, the disposal number of recessed portions 8 is ensured, and the film of water removing function of the recessed portion 8 is appropriately ensured. Additionally, by satisfying Da ≤ 4.0 unit/cm², the contact patch area of the land portions 31 to 33 is appropriately ensured.

In the pneumatic tire 1, the land portions 31 to 33 include, in the contact patch, the plurality of sipes 6, and the recessed portions 8 are disposed spaced apart from the sipes 6 (for example, see FIG. 3). Such a configuration is advantageous because by disposing the recessed portions 8 and the sipes 6 separated from each other, the rigidity of the land portions 31 to 33 is ensured, and the braking performance on ice of the tire is improved.

Additionally, in the pneumatic tire 1, the sipes 6 are disposed side by side to divide the land portions 32 into a plurality of sections in the tire circumferential direction (not illustrated). The section including the recessed portion 8 in only the central region in the tire lateral direction and the section including the recessed portion 8 in only the end portion regions in the tire lateral direction are disposed in an alternating arrangement in the tire circumferential direction. Such a configuration is advantageous because by dispersedly disposing the recessed portions 8, the film of water absorbing function of the recessed portion 8 can be increased and the rigidity of the land portions can be ensured. Additionally, by providing the recessed portions in each continuous section, a film of water on the icy road surface is efficiently absorbed and the braking performance on ice of the tire is improved.

Additionally, in the pneumatic tire 1, the sipes 6 are disposed side by side in the tire circumferential direction to divide each of the land portions 31 to 33 into a plurality of sections. Additionally, at least one of two discretionary adjacent sections includes a recessed portion 8 in the end portion regions in the tire lateral direction (see FIGS. 3 and 7). In such a configuration, the recessed portions 8 are disposed in the end portion regions in the tire lateral direction where the ground contact pressure is high and a film of water is likely to form. Such a configuration is advantageous because a film of water on the icy road surface is efficiently absorbed and the braking performance on ice of the tire is improved.

Additionally, in the pneumatic tire 1, the sipes 6 are disposed side by side in the tire circumferential direction to divide each of the land portions 31 to 33 into a plurality of sections. Three discretionary sections adjacent in the tire circumferential direction include a section including a recessed portion 8 in the end portion regions in the tire lateral direction and a section including a recessed portion 8 in the central region in the tire lateral direction (see FIGS. 3 and 6). Such a configuration is advantageous because the recessed portions 8 are disposed dispersedly throughout the end portion regions and the central regions of the land portions 31 to 33.

Additionally, in the pneumatic tire 1, the sipes 6 are disposed side by side in the tire circumferential direction to divide each of the land portions 31 to 33 into a plurality of sections. Three discretionary sections adjacent in the tire circumferential direction include a section including a recessed portion 8 and a section without a recessed portion 8 (see FIG. 7). In such a configuration, by disposing a section without a recessed portion 8, the recessed portions 8 are disposed in a dispersed manner. Such a configuration is advantageous because the contact patch area of the land portions 31 to 33 is ensured, and the braking performance on ice of the tire is improved.

Additionally, in the pneumatic tire 1, the land portions 31 to 33 are rows of blocks that each include a plurality of blocks 5, and the recessed portions 8 are disposed in the corner portions of the blocks 5 (see FIGS. 3, 6, and 7). In such a configuration, the recessed portions 8 are disposed in the corner portions of the blocks 5 where the ground contact pressure is high and a film of water is likely to form. Such a configuration is advantageous because a film of water on the icy road surface is efficiently absorbed and the braking performance on ice of the tire is improved.

Additionally, in the pneumatic tire 1, the land portions 31 to 33 are rows of blocks that each include a plurality of blocks 5, and the recessed portions 8 are not disposed in the end portions of blocks 5 in the tire circumferential direction or the central region in the tire lateral direction (see FIGS. 3, 6, and 7). Such a configuration is advantageous because the contact patch area and the rigidity of the end portions of the blocks on the leading side and trailing side is ensured, and the braking performance on ice of the tire are improved.

Additionally, in the pneumatic tire 1, the opening area of the recessed portion 8 ranges from 2.5 mm² to 10 mm². Such a configuration is advantageous because the opening area of the recessed portions 8 is made appropriate. In other words, by the opening area of the recessed portions 8 being 2.5 mm² or greater, the edge function and the water absorbency of the recessed portions 8 are ensured. Additionally, by the opening area of the recessed portions 8 being 10 mm² or less, the contact patch area and the rigidity of the land portions 31 to 33 are ensured.

In the pneumatic tire 1, the recessed portions 8 have a circular (see FIG. 4) or elliptical shape (not illustrated) in the contact patch of the land portions 31 to 33. Such a configuration is advantageous because compared to a configuration (not illustrated) in which the recessed portions 8 have a polygonal shape, uneven wear of the contact patch of the land portions 31 to 33 can be suppressed.

In the pneumatic tire 1, the wall angle α of the recessed portions 8 is in the range -85 degrees ≤ α ≤ 95 degrees (see FIG. 5). Such a configuration is advantageous because the edge function of the recessed portions 8 is improved.

Additionally, in the pneumatic tire 1, the depth Hd of the recessed portions 8 and the groove depth Hg of the narrow shallow grooves 7 have the relationship 0.5 ≤ Hd/Hg ≤ 1.5 (see FIG. 5). Such a configuration is advantageous because the depth Hd of the recessed portions 8 is made appropriate. In other words, 0.5 ≤ Hd/Hg is satisfied, which ensures the water absorbing function of the recessed portions 8. Additionally, Hd/Hg ≤ 1.5 is satisfied, which makes it possible to suppress a decrease in rigidity of the land portions 31 to 33 caused by the recessed portions 8 being too deep relative to the narrow shallow grooves 7.

In the pneumatic tire 1, at least one recessed portion 8 is disposed in a position that corresponds to a vent hole of a tire mold (not illustrated). Such a configuration is advantageous because the vent hole is effectively utilized, and the number of unnecessary recesses are reduced in the contact patch of the land portions 31 to 33, allowing the contact patch area of the land portions 31 to 33 to be appropriately ensured.

Additionally, in the pneumatic tire 1, the narrow shallow grooves 7 have an elongated shape and are disposed side by side (see FIGS. 4 and 8 to 14). In such a configuration, by the narrow shallow grooves 7 having an elongated shape, a film of water absorbed by the narrow shallow grooves 7 can be guided in the longitudinal direction of the narrow shallow grooves 7 and discharged. Additionally, by the recessed portions 8 being disposed across the narrow shallow grooves 7 with an elongated shape, a film of water absorbed by the recessed portions 8 are retained therein, and the water absorbency of the land portions 31 to 33 is improved. Such a configuration is advantageous because the braking performance on ice of the tire is improved.

Additionally, in the pneumatic tire 1, the narrow shallow grooves 7 have an annular shape and are disposed separated from each other (see FIGS. 15 and 16). In such a configuration, the rigidity of the land portions 31 to 33 is higher than in a configuration in which the narrow shallow grooves 7 penetrate through the land portions 31 to 33. Such a configuration is advantageous because the braking performance on ice of the tire is improved.

Additionally, in the pneumatic tire 1, the narrow shallow grooves 7 are disposed in a mesh-like manner (see FIGS. 18 to 20). Such a configuration is advantageous because the groove area of the narrow shallow grooves 7 is increased, and the film of water absorbing function of the narrow shallow groove 7 is improved.

Additionally, in the pneumatic tire 1, the narrow shallow grooves 7 have an annular shape and are disposed in communication with each other (see FIG. 21). Such a configuration is advantageous because the groove area of the narrow shallow grooves 7 is increased, and the film of water absorbing function of the narrow shallow grooves 7 is improved.

### Examples

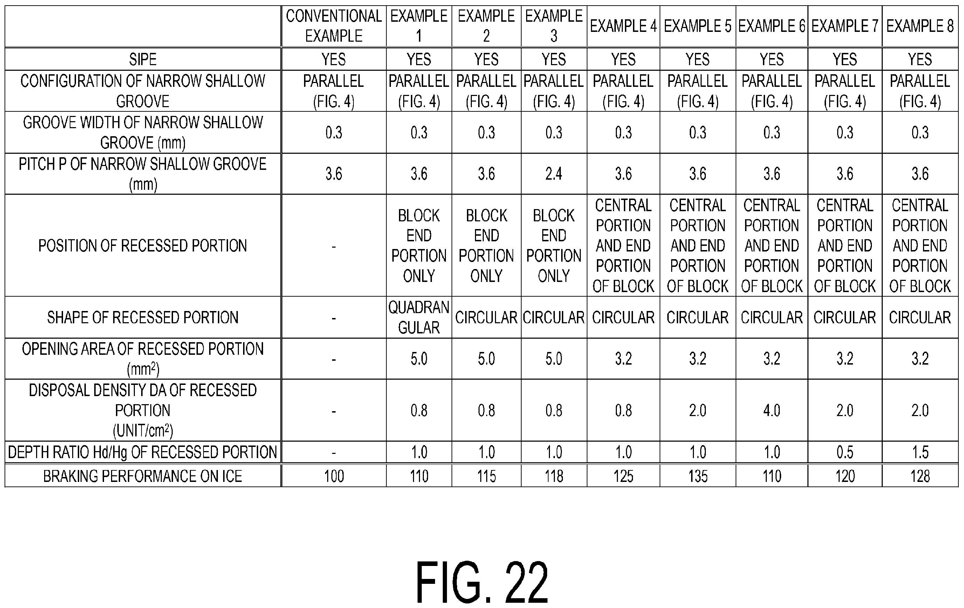

FIG. 22 is a table showing results of performance testing of pneumatic tires according to embodiments of the present invention.

In the performance testing, a plurality of different test tires were evaluated for braking performance on ice. The test tires with a tire size of 195/65R15 were mounted on an applicable rim as defined by JATMA, and an air pressure of 230 kPa and the maximum load as defined by JATMA were applied to the test tires. Also, the test tires were mounted on a test vehicle, a front-engine front-drive (FF) sedan with an engine displacement of 1600 cc.

Evaluation of braking performance on ice: the test vehicle was driven on a predetermined icy road surface, and the braking distance at a traveling speed of 40 km/h were measured. Then, the measurement results were expressed as index values with the result of the conventional example being defined as the reference (100). In this evaluation, larger values are preferable.

The test tires of Examples 1 to 8 have the configuration illustrated in FIGS. 1 and 2, and the blocks 5 of the land portions 31 to 33 include the sipes 6, the narrow shallow grooves 7, and the recessed portions 8. Additionally, as illustrated in FIG. 4, the linear narrow shallow grooves 7 are disposed parallel with each other at an incline with respect to the tire circumferential direction and penetrate through the blocks 5. In Examples 1 to 3, the recessed portions 8 are disposed only in the end portion regions of the blocks 5 in the tire lateral direction (for example, see FIG. 7). In Examples 4 to 8, the recessed portions 8 are disposed in the entire region of the blocks 5 (for example, FIGS. 3 and 6). Additionally, the narrow shallow grooves 7 have a groove width and a groove depth of 0.3 mm.

The test tire according to the conventional example had the configuration of Example 2 except that while the blocks 5 include the sipes 6 and the narrow shallow grooves 7, the recessed portions 8 were not provided.

As shown in the test results, it can be seen that the braking performance on ice the tire is improved in the test tires of Examples 1 to 8.

### Reference Signs List

- 1: Pneumatic tire
- 21, 22: Circumferential main groove
- 23: Circumferential narrow groove
- 31 to 33: Land portion
- 311: Notched portion
- 41 to 43: Lug groove
- 5: Block
- 6: Sipe
- 7: Narrow shallow groove
- 8: Recessed portion
- 11: Bead core
- 12: Bead filler
- 13: Carcass layer
- 14: Belt layer
- 141, 142: Cross belt
- 143: Belt cover
- 15: Tread rubber
- 16: Sidewall rubber
- 17: Rim cushion rubber

## Claims

1. A pneumatic tire comprising in a tread surface thereof
a land portion which is a rib or a row of blocks,
the land portion comprising in a contact patch thereof
a plurality of narrow shallow grooves, and
a plurality of recessed portions disposed separated from the narrow shallow grooves.

2. The pneumatic tire according to claim 1, wherein
a disposal density Da of the recessed portions in an entire region of a continuous contact patch of the land portion is in the range 0.8 unit/cm² ≤ Da ≤ 4.0 unit/cm².

3. The pneumatic tire according to claim 1 or 2, wherein
the land portion comprises in the contact patch thereof a plurality of sipes, and the recessed portions are disposed spaced apart from the sipes.

4. The pneumatic tire according to any one of claims 1 to 3, wherein
the sipes are disposed side by side and divide the land portion into a plurality of sections in a tire circumferential direction, and
the plurality of sections comprise a section comprising at least one of the recessed portions only in a central region in a tire lateral direction and a section comprising at least one of the recessed portions only in end portion regions in the tire lateral direction disposed in an alternating arrangement in the tire circumferential direction.

5. The pneumatic tire according to any one of claims 1 to 4, wherein
the sipes are disposed side by side in the tire circumferential direction and divide the land portion into a plurality of sections, and
at least one of two discretionary adjacent sections of the plurality of sections comprises at least one of the recessed portions in end portion regions in the tire lateral direction.

6. The pneumatic tire according to any one of claims 1 to 5, wherein
the sipes are disposed side by side in the tire circumferential direction and divide the land portion into a plurality of sections, and
three discretionary sections adjacent in the tire circumferential direction comprise a section comprising at least one of the recessed portions in end portion regions in the tire lateral direction and a section comprising at least one of the recessed portions in a central region in the tire lateral direction.

7. The pneumatic tire according to any one of claims 1 to 6, wherein
the sipes are disposed side by side in the tire circumferential direction and divide the land portion into a plurality of sections, and
three discretionary sections adjacent in the tire circumferential direction comprise a section with at least one of the recessed portions and a section without any of the recessed portions.

8. The pneumatic tire according to any one of claims 1 to 7, wherein
the land portion is a row of blocks that comprises a plurality of blocks, and the recessed portions are disposed in corner portions of the blocks.

9. The pneumatic tire according to any one of claims 1 to 8, wherein
the land portion is a row of blocks that comprises a plurality of blocks, and the recessed portions are not disposed in end portions in the tire circumferential direction or a central region in the tire lateral direction of the blocks.

10. The pneumatic tire according to any one of claims 1 to 9, wherein an opening area of the recessed portions ranges from 2.5 mm² to 10 mm².

11. The pneumatic tire according to any one of claims 1 to 10, wherein the recessed portions have a circular or elliptical shape at the contact patch of the land portion.

12. The pneumatic tire according to any one of claims 1 to 11, wherein a wall angle α of the recessed portions is in the range -85 degrees ≤ α ≤ 95 degrees.

13. The pneumatic tire according to any one of claims 1 to 12, wherein a depth Hd of the recessed portions and a groove depth Hg of the narrow shallow grooves have the relationship 0.5 ≤ Hd/Hg ≤ 1.5.

14. The pneumatic tire according to any one of claims 1 to 13, wherein at least one of the recessed portions is disposed at a position corresponding to a vent hole of a tire mold.
